# EUROPÄISCHE PATENTSCHRIFT

(11) **EP 4 125 704 B1**
(45) Veröffentlichungstag und Bekanntmachung des Hinweises auf die Patenterteilung: **15.01.2025**
(21) Anmeldenummer: 21708616.4
(22) Anmeldetag: 25.02.2021
(51) Int. Cl.: A61C 3/14

(54) **VORRICHTUNG ZUM EXTRAHIEREN EINER ZAHNWURZEL**
DEVICE FOR THE EXTRACTION OF A TOOTH ROOT
DISPOSITIF D'EXTRACTION DE RACINE DENTAIRE

(30) Priorität: 23.03.2020 CH 3462020
(43) Veröffentlichungstag der Anmeldung: 08.02.2023
(73) Patentinhaber: Syfrig, Benno, 6006 Luzern (CH)
(72) Erfinder: Syfrig, Benno, 6006 Luzern (CH)
(74) Vertreter: Luchs, Willi
(86) Internationale Anmeldenummer: PCT/EP2021/054716
(87) Internationale Veröffentlichungsnummer: WO 2021/190852

(56) Entgegenhaltungen:
- WO-A1-2004/060191
- CN-U- 208 031 311
- US-A1- 2005 008 987

## Beschreibung

Die Erfindung betrifft eine Vorrichtung zum Extrahieren einer Zahnwurzel nach dem Oberbegriff des Anspruchs 1.

Bei einer bekannten Vorrichtung zur Extraktion einer Zahnwurzel gemäss der Druckschrift EP-A-1 578 296 ist ein in den Mund teilweise einführbares und darin abstützbares Spanngerät zur Erzeugung der zum Wurzelziehen notwendigen Zugkraft vorgesehen, welches ein verstellbares Zugelement aufweist, das mit einem in der Zahnwurzel befestigbaren Stift verbindbar ist. Zweckmässigerweise umfasst das Spanngerät einen langgestreckten Grundkörper und einen gegenüber diesem längsverstellbaren, mit dem umgelenkten Zugelement wirkverbundenen Spannsupport, der mit einem Gewindebolzen versehen ist, welcher durch eine am Grundkörper befestigte Stützhülse hindurchragt und auf ihm eine Rändelmutter aufgeschraubt ist, die bei der Stützhülse anschlägt.

Mit dieser Vorrichtung kann eine Extraktion der Zahnwurzel je nach den Gegebenheiten mit relativ geringem Aufwand ausgeführt werden, bei dem der mit dem Zugelement des Spanngerätes verbundene, in der Zahnwurzel befestigte Stift mittels des in den Mund teilweise eingeführten und darin abgestützten Spanngerätes durch ein manuelles Drehen der Rändelmutter mit einer Zugkraft versehen und die Zahnwurzel mit ihm ausgezogen wird. Damit kann ein zuverlässiges Extrahieren einer Zahnwurzel durch Handbetätigung erzielt werden.

Eine Vorrichtung einer Zahnextraktion gemäss der Druckschrift CN208031311 umfasst im Wesentlichen ein Aussengehäuse, eine aussen bei diesem angeordnete Festplatte, eine diesen führenden Gleitschaft, Klemmzangen, die von einer Schraube in zwei Richtungen gegen- bzw. voneinander weg bewegbar sind. Zudem ist ein endloser Zugriemen vorgesehen, der durch eine Einrichtung in seiner Längsrichtung verschiebbar und mittels dem diese Schraube drehbar ist. Zudem ist ein zweiter Zugriemen im Gehäuse angeordnet, der am einen Ende von einem Motor via ein Schneckenrad längsbewegbar und am andern Ende mit der Festplatte verbunden ist und diese beim Extrahieren zieht, wobei sie diese Klemmzangen in entgegengesetzter Richtung bewegt und damit der geklemmte Zahn ausgezogen wird. Beim Extrahieren mit dem ersten endlosen Zugriemen werden diese Klemmzangen von Hand mittels der Einrichtung den zu extrahierenden Zahn festgeklemmt und dass anschliessend der zweite Zugriemen durch den Motor gezogen und mit ihm die Festplatte mit den Klemmzangen den Zahn ausreissen.

Der Erfindung liegt die Aufgabe zugrunde, ausgehend von dieser gattungsmässigen Vorrichtung eine solche zu schaffen, mittels welcher dieses Extrahieren der Zahnwurzel zumindest teilweise automatisiert ermöglicht wird, ohne dass der Zahnarzt beim Extraktionsvorgang in der Regel manuell eingreifen muss.

Diese Aufgabe ist erfindungsgemäss durch die Merkmale des Anspruchs 1 gelöst.

Erfindungsgemäss das Zugelement durch ein dem Zugmechanismus zugeordneten steuerbaren Motor mit einer solchen Zugkraft versehen werden kann, dass damit insbesondere die Zahnwurzel extrahiert wird.

Eine Vorrichtung weist ein vorderes mundseitiges Auflager, ein in letzterem geführtes Zugelement und ein mit diesem verbindbaren Zugmechanismus auf, wobei das Zugelement vorderseitig annähernd rechtwinklig zur Längsausdehnung des Auflagers umgelenkt und mit einem bei der Zahnwurzel befestigbaren Stift oder dergleichen verbindbar ist.

Sehr vorteilhaft wird bei dem Verfahren zur Steuerung dieser Vorrichtung die Zugkraft beim Zugelement manuell oder automatisch durch Erhöhung der vorzugsweise elektrischen Leistung des Motors des Zugmechanismus auf einen vorgegebenen festen oder veränderbaren Wert erhöht und darauffolgend, wenn sich die Zahnwurzel gelöst hat, die Leistung des Motors auf einen bestimmten Wert oder auf null reduziert.

Damit kann eine Extraktion einer Zahnwurzel durch einen Fachmann insbesondere einen Zahnarzt mit wenig manuellem Handling sehr einfach und äusserst sicher ausgeführt werden. Ein solcher chirurgischer Eingriff ist auch für einen Patienten äusserst angenehm und das ganze Prozedere kann mit einem besser kontrollierbaren Ablauf ohne Risiken von Komplikationen erfolgen. Ein Zahnarzt kann dieses erfindungsgemässe Steuern der Vorrichtung und damit das Extrahieren mit schnellem Lernerfolg anwenden.

Durch das automatisierte Einstellen der elektrischen Leistung des Motors des Zugmechanismus auf die maximale Zugkraft bzw. der Reduktion derselben bei erfolgter Lösung der Zahnwurzel lässt sich eine solche Extraktion auf äusserst einfache Weise durchführen und die Tätigkeit des Zahnarztes kann sich bei störungsfreiem Verlauf auf die Überwachung des Ablaufs beschränken.

Sehr vorteilhaft wird ein steuerbarer elektrischer Drehmotor für den Zugmechanismus als Motor verwendet, bei dem durch ein Ermitteln seiner Drehzahl pro Zeiteinheit der Verstellweg bzw. die Verstellgeschwindigkeit des Zugelementes bestimmt werden kann.

Des weiteren ist bei der erfindungsgemässen Vorrichtung der Zugmechanismus mit dem steuerbaren Motor in einem Gehäuse mit dem frontseitigen Auflager versehen und er wird von einer Steuerungseinrichtung derart angesteuert, dass diese Extraktion der Zahnwurzel ohne manuellen Eingriff ermöglicht wird.

Die Erfindung sowie weitere Vorteile derselben sind nachfolgend anhand von Ausführungsbeispielen unter Bezugnahme auf die Zeichnung näher erläutert. Es zeigt:
- Fig. 1: einen Längsschnitt einer erfindungsgemässen Vorrichtung,
- Fig. 2: eine perspektivische Seitenansicht der erfindungsgemässen Vorrichtung nach Fig. 1, bei der ein Drehmotor und ein Untersetzungsgetriebe getrennt vom Auflager jeweils als eine Baueinheit veranschaulicht sind, und
- Fig. 3: ein Diagramm des Verlaufs der Zugkraft des Motors auf das Zugelement sowie der Verstellweg des Zugelementes jeweils in Abhängigkeit der Zeit.

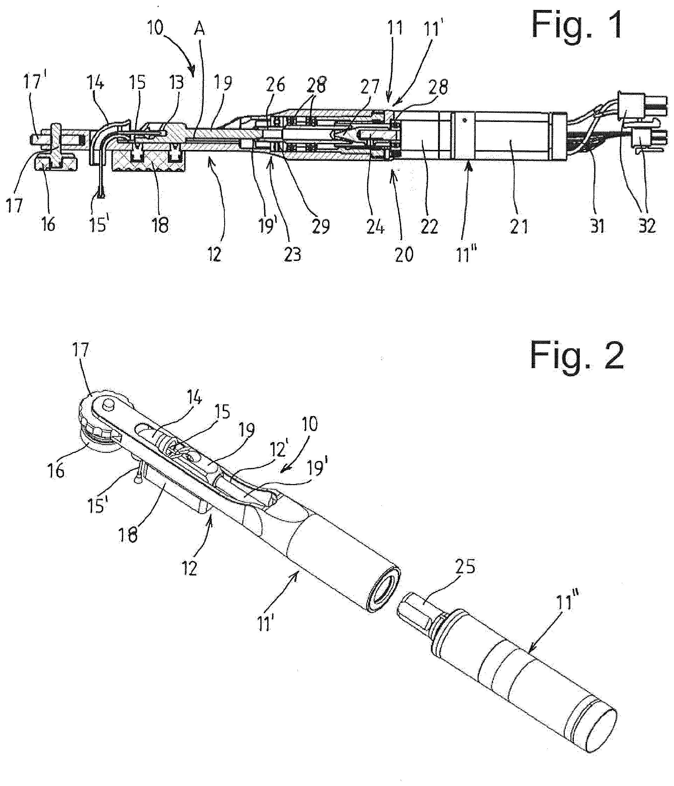

Fig. 1 und Fig. 2 zeigen eine Vorrichtung 10 zum Extrahieren insbesondere einer nicht näher gezeigten Zahnwurzel, welche insbesondere in der Dentaltechnik Verwendung findet. Bei den Zahnwurzeln kann der Zahn teils oder ganz abgebrochen oder entfernt worden sein, und es kann sich um natürliche oder künstliche Wurzeln oder um solche mit einem künstlichen Teil handeln.

Die Vorrichtung 10 umfasst ein mehrteiliges Gehäuse 11 und ein mit diesem verbundenes vorderes Auflager 12 mit jeweils einer länglichen Ausbildung. Im Auflager 12 ist ein Zugelement 15 und ein mit letzterem verbundener Schlitten 19 längsgeführt, der in einer Führungsbahn 12' des Auflagers 12 annähernd spielfrei geführt und am hinteren Ende mit einem Zugmechanismus 20 verbindbar ist. Das Zugelement 15 ist vorderseitig um ein abgewinkeltes Führungselement 14 annähernd rechtwinklig zur Längsausdehnung des Auflagers 12 umgelenkt und es weist an seinem vorderen Ende ein Verbindungselement 15' auf, das mit einem in der Zahnwurzel befestigbaren Stift oder dergleichen einhäng-, einschraub- oder anderweitig koppelbar ist.

Frontseitig und hinter dem umgelenkten Zugelement 15 ist das Auflager 12 mit je einer Auflagebacke 16, 18 versehen, von denen zumindest die eine durch eine Justierschraube 17 mit einer Mutter 17' ebenfalls rechtwinklig zum Auflager 12 verstellbar ist, um die Ausrichtung der Vorrichtung 10 im Mund eines Patienten so einzustellen, dass die Zugrichtung des Zugelementes 15 effektiv in Richtung der Wurzel verläuft, damit beim Extrahieren nicht erschwerende seitliche Reibkräfte entstehen, wenn die Zugrichtung von der Achsrichtung des Spaltes abweichen würde. Die Ausgestaltung bzw. Dimensionierung dieses vorderseitigen Auflagers 12 mit der Führung des Zugelementes 15 kann selbstverständlich je nach Bedarf unterschiedlich ausgeführt sein.

Erfindungsgemäss ist der Zugmechanismus 20 im Gehäuse 11 mit einem steuerbaren Motor 21 für die Erzeugung einer Zugkraft des Zugelementes 15 versehen, welcher von einer Steuerungseinrichtung derart angesteuert wird, dass mit diesem Motor 21 eine solche Zugkraft auf das Zugelement 15 erzeugbar ist, dass eine Extraktion der Zahnwurzel ohne manuellen Eingriff ermöglicht wird.

Sehr vorteilhaft ist dieser Motor als Drehmotor 21 ausgebildet, der rückseitig in dem Gehäuse 11 angeordnet ist und von diesem nach hinten wegführende Verbindungskabel 31 mit Anschlusssteckern 32 vorgesehen sind. Gleichachsig zu diesem Drehmotor 21 sind im Gehäuse 11 ein mit diesem durch eine Antriebswelle drehverbundenes Untersetzungsgetriebe 22 und ein Umwandlungselement 23 der Dreh- in eine Linearbewegung für die Verstellung des Schlittens 19 und damit des Zugelementes 15 im Auflager versehen.

Das Umwandlungselement 23 ist aus einer mit einer Abtriebswelle 24 des Untersetzungsgetriebes 22 drehverbundenen Gewindehülse 26 und einer Gewindespindel 19' des Schlittens 19 gebildet. Die Abtriebswelle 24 ist via ein Kupplungsglied 27 gleichachsig mit der Gewindehülse 26 koppelbar, wobei letztere am Umfang von Gleitlagern 28 und wenigstens einem Axiallager 29 derart im Gehäuse abgestützt ist, dass sichergestellt ist, dass von diesem die vorwiegend entlang der Achse A entstehenden Zugkräfte bei der Extraktion sicher aufgenommen werden.

Der Drehmotor 21 ist dabei für seine Steuerung durch diese Verbindungskabel 31 mit einer nicht näher gezeigten Steuerungseinrichtung elektrisch verbunden. Zu diesem Zwecke sind zum einen Verbindungskabel 31 für die Stromversorgung und zum andern für die Steuerungs- bzw. für Messelemente des Drehmotors 21 als Verbindung zu der Steuerungseinrichtung in einem externen Gerät vorgesehen, durch welche die erforderlichen Steuer- bzw. Messfunktionen programmgesteuert ausgeführt werden können.

Das erzeugte Drehmoment auf den Rotor des Drehmotors 21 erfolgt vorzugsweise durch die einstellbare Stromstärke des Motors. Damit kann die Zugkraft F auf das Zugelement 15 durch die Steuerungseinrichtung entsprechend eingestellt und beim Extraktionsvorgang automatisiert gesteuert werden. Zudem ist der Drehmotor 21 vorteilhaft mit einer nicht näher gezeigten Drehzahlmesseinrichtung ausgestattet. Damit wird ermöglicht, dass die aktuelle Drehzahl durch eine Signalübertragung an die Steuerungseinrichtung ermittelt und von ihr ausgewertet werden kann.

Beim Drehmotor 21 kann es sich zum Beispiel um einen bürstenlosen Gleichstrommotor mit einer eisenlosen Wicklung handeln, bei dem eine annähernd stufenlose Veränderbarkeit der Drehzahl möglich ist, wie ein solcher von Maxon durch den Motortyp maxon EC motor bekannt ist. In diesem Drehmotor ist eine solche Drehzahlmesseinrichtung integriert, welche durch Hallsensoren als Messelemente auf an sich bekannte Weise funktioniert.

Auch das Untersetzungsgetriebe 22 kann von Maxon des Typs maxon gear verwendet sein, welches als Planetengetriebe ausgebildet ist. Diese sind daher nicht weiter im Detail erläutert. Selbstverständlich können auch andere Motoren und Getriebe verwendet werden, welche den erforderlichen Funktionen gerecht werden.

Mit dem Planetengetriebe wird ermöglicht, dass die Drehzahl des Motors von beispielsweise zwischen 100 bis 1000 U/min auf einige Umdrehungen pro Minute reduziert und mit dem Umwandlungselement 23 mit einer Gewindesteigung von zum Beispiel einem Millimeter eine Längenverstellung des Schlittens 19 und damit des Zugelementes 15 entlang der Achse A von einigen Millimetern pro Minute eingestellt werden kann, dadurch insbesondere die Extraktionskraft optimal ausgelegt werden kann.

Sowohl dieser Drehmotor 21 als auch das Planetengetriebe 22 zeichnen sich dadurch aus, dass diese bei ausreichender Leistung einen kleinen zylindrischen Aussendurchmesser, zum Beispiel 15 bis 30 Millimetern, aufweisen, so dass das Gehäuse 11 ebenfalls mit einer zylindrischen Aussenform als Griff mit einem dem Handballen angepassten Durchmesser dimensioniert werden kann. Der Aussenmantel des Gehäuses 11 kann aus einem aufgerauten oder einem grifffesten Material gefertigt sein, um einen guten Halt zu ermöglichen. Es besteht dabei aus mehreren aneinandergereihten Zylindern mit gleichen Durchmessern, bei denen der Drehmotor 21 und das Untersetzungsgetriebe 22 eine Baueinheit 11" und das Auflager 12 mit dem Zylinder eine Baueinheit 11' bilden, die drehfest ineinander gesteckt und fixiert werden können.

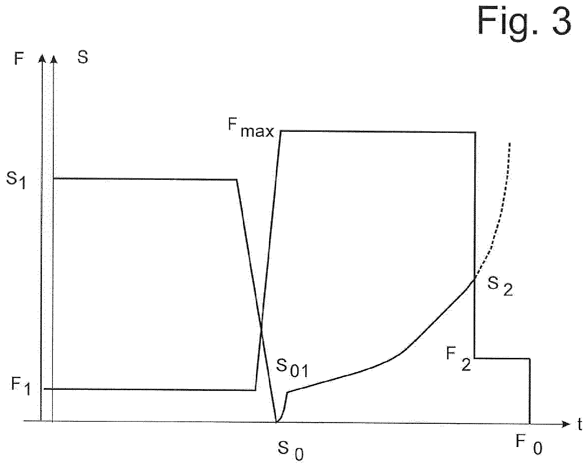

Gemäss dem Diagramm nach Fig. 3 ist das Verfahren der Steuerung der Vorrichtung 10 beim Extrahieren aufgezeigt. Es ist dabei in der Abszisse die Zeit t und bei zwei Ordinaten einerseits die vom Zugelement 15 auf die Zahnwurzel wirkende Zugkraft F und andererseits der Verstellweg S pro Zeiteinheit des Zugelementes 15 bzw. der Zahnwurzel verdeutlicht.

Beim Extraktionsvorgang wird vorbereitend auf herkömmliche Weise diese Vorrichtung 10 mit dem Auflager 12 in einem Mund eines Patienten platziert und so ausgerichtet, dass die zu extrahierende Zahnwurzel mit dem in diese eingeschraubten Stift unter- oder oberhalb des rechtwinklig zum Auflager 12 wegragenden Zugelementes 15 liegt und das Verbindungselement 15' von letzterem beim Ende des Stiftes eingehängt oder anderweitig verbunden wird.

Wie oben erwähnt ist, muss darauf geachtet werden, dass die Ziehachse und die Achse des Wurzel, in dem die Zahnwurzel durch Fasern gehalten ist, annährend gleich bzw. koaxial zueinander verlaufend ausgerichtet sind, um optimale Bedingungen für eine möglichst ungehinderte Extraktion zu schaffen. Dies kann vorne beim Auflager 12 mit der in dieser gelagerten Mutter 17' und der mit ihr zusammenwirkenden Justierschraube 17 und der Auflagebacke 16 entsprechend eingestellt werden.

Wenn von einem Zahnarzt oder dem Fachpersonal die Vorrichtung 10 im Mund richtig positioniert und fest gehalten wird, kann er den Drehmotor 21 mittels eines Schaltorgans, zum Beispiel durch ein Fusspedal oder einen Handschalter, in Gang setzen und das Ziehen auslösen, so dass das Zugelement 15 automatisiert mit einer annähernd konstanten geringen Verstellweg pro Zeiteinheit bzw. Verstellgeschwindigkeit S₁ und Zugraft F₁ von der Zahnwurzel weg entlang der Achse A gegen das Gehäuse 11 hin bewegt wird.

Sobald das Zugelement 15 den gestreckten Zustand einnimmt, sinkt die Verstellgeschwindigkeit bei der wirkenden geringen Zugkraft F₁ auf einen Wert S₀ auf annähernd Null ab, was je nach Positionierung der Vorrichtung 10 nach einem Verstellweg von wenigen Millimetern erfolgen kann. Durch das Messen der Drehzahl des Drehmotors 21 wird dieses Absinken seiner Verstellgeschwindigkeit auf annähernd null festgestellt und an die Steuerungseinrichtung durch die Signalübertragung gemeldet.

Anschliessend wird die Zugkraft F automatisch durch Erhöhung der elektrischen Leistung des Drehmotors 21 auf einen vorgegebenen festen oder veränderbaren Maximalwert Fₘₐₓ erhöht. Damit wird die volle Zugkraft Fₘₐₓ auf die Zahnwurzel übertragen. Das Zugelement 15 wird in der Regel zu Beginn der erhöhten Zugkraft Fₘₐₓ schnell von der Verstellgeschwindigkeit S₀ von Null auf einen sich ergebenden Wert S₀₁ erhöht, weil als erstes das Zugelement 15, das Umwandlungselement 23 und der Drehmotor 21 voll auf Spannung gestreckt bzw. verstellt werden. Danach wird die Verstellgeschwindigkeit S₀₁ bei der maximal wirkenden Zugkraft Fₘₐₓ je nach Halt der Zahnwurzel wie in Fig. 3 dargestellt leicht zunehmen.

Es kann sich aber auch so verhalten, dass sich das Zugelement 15 vorerst nicht bewegt und es erst nach einer gewissen Belastungszeit auf diese die Zahnwurzel im Kieferknochen haltenden Fasern verstellt. Es kann im Rahmen der Erfindung vorgesehen sein, dass der Zahnarzt während dem Ziehen das Schaltorgan betätigen kann, so dass automatisch vom Drehmotor 21 ein veränderbarer Maximalwert Fₘₐₓ erzeugt wird, um damit ein Lösen der Zahnwurzel zu verbessern. Dieser Maximalwert Fₘₐₓ kann automatisiert beispielsweise auf die Hälfte reduziert und dann wieder auf den vollen Wert gesteigert werden, und dies kann mehrmals wie ein oszillierender Kraftverlauf erfolgen. Es kann auch vorkommen, dass sich die Zahnwurzel im Kieferknochen wie verkeilt und dass dann der Zahnarzt zusätzlich mit einem entsprechenden Werkzeug versucht, dies zu lösen.

Wenn sich die Zahnwurzel vom Kieferknochen gelöst oder zumindest der Widerstand wurzelseitig nachgelassen hat, wird die Leistung des Drehmotors 21 und damit die Zugkraft Fₘₐₓ auf einen bestimmten Wert F₂ und schliesslich auf den Wert F₀ als Stopp reduziert. Dies hängt davon ab, wie weit die Zahnwurzel herausgezogen ist und ob sie allenfalls unten am Führungselement 14 ansteht. Sobald sich die Zahnwurzel gelöst oder der Widerstand wurzelseitig nachgelassen hat, bewirkt dies bei der vollen Zugkraft eine Erhöhung der Verstellgeschwindigkeit S₂. Dies wird von der Steuerungseinrichtung erkannt und sie ist derart programmiert, dass sofort die Motorenleistung reduziert wird.

Der Verstellweg des Zugelementes 15 im Auflager 12 könnte alternativ durch ein Referenzieren seiner Längsposition bestimmt werden. Die Erhöhung der Motorenleistung vor dem Extrahieren und/oder das Reduzieren derselben nach dem Lösen der Zahnwurzel würde aufgrund der referenzierten Längspositionen des Zugelementes und nicht durch seine Verstellgeschwindigkeiten festgelegt werden. Die Verstellwege des Zugelementes könnten durch die ermittelten Drehzahlen des Drehmotors 21 gezählt und danach gesteuert werden.

Das Verändern der Motorenleistung könnte auch durch ein manuelles Betätigen des Schaltorgans erfolgen, bei dem das Extrahieren mittels des Zugmechanismus eingeleitet, unterbrochen oder gestoppt werden kann.

Die Erfindung ist mit dem oben erläuterten Ausführungsbeispiel ausreichend dargetan. Sie könnte aber selbstverständlich noch durch weitere Varianten erläutert sein.

Im Prinzip könnte der Drehmotor und gegebenenfalls auch das Untersetzungsgetriebe in einem externen Gerät integriert sein und eine Dreh- und/oder einer Linearbewegung durch ein Übertragungselement in einem flexiblen Rohr oder dergleichen zwischen dem Gerät und dem Gehäuse mit dem Zugelement verbindbar sein. Das Untersetzungsgetriebe könnte, wie beim obigen Ausführungsbeispiel dargetan ist, ebenso im Gehäuse enthalten sein und es wäre dann mit einem drehbaren Übertragungselement gekoppelt.

Es könnte auch ein Linearmotor oder ein Drehmotor, der direkt mit dem Zugelement via eine Verbindung, zum Beispiel eine Mutter/Gewindespindel, vorgesehen sein. Das Zugelement könnte aus mehr als einem Längselement mit vorzugsweise einer parallelen Ausrichtung vorgesehen sein und es wird jeweils ein Drahtseil oder ähnliches verwendet.

## Patentansprüche

1. Vorrichtung zum Extrahieren einer Zahnwurzel, wobei
die Vorrichtung (10) ein vorderes mundseitiges Auflager (12), ein in letzterem geführtes Zugelement (15) und ein mit diesem verbindbaren Zugmechanismus (20) aufweist, wobei das Zugelement (15) vorderseitig annähernd rechtwinklig zur Längsausdehnung des Auflagers (12) umgelenkt ist
wobei der Zugmechanismus (20) einen steuerbaren Motor für die Erzeugung einer Zugkraft des Zugelementes (15) aufweist, wobei das Zugelement (15) mit einem in der Zahnwurzel befestigbaren Stift verbindbar ist, wobei der steuerbare Motor in einem Gehäuse (11) mit dem frontseitigen vorderen Auflager (12) enthalten ist, oder in einem separaten Gerät enthalten ist und von einer Steuerungseinrichtung derart angesteuert wird, dass mit diesem Motor eine solche Zugkraft (Fmax) auf das Zugelement (15) erzeugbar ist, dass eine Extraktion einer Zahnwurzel ohne manuellen Eingriff ermöglicht wird,
**dadurch gekennzeichnet**, H
dass die Vorrichtung eingerichtet ist, den Verstellweg pro Zeiteinheit des Zugelementes (15) bei einer vorgegebenen Leistung beim Motor zu ermitteln oder der steuerbare Motor ein steuerbarer elektrischer Drehmotor (21) ist und die Vorrichtung eingerichtet ist, den Verstellweg bzw. die Verstellgeschwindigkeit des Zugelements durch die Drehzahl pro Zeiteinheit des Drehmotors (21) zu ermitteln.

2. Vorrichtung nach Anspruch 1, **dadurch gekennzeichnet, dass** der Zugmechanismus (20) einen Drehmotor (21) als steuerbaren Motor, ein mit diesem drehverbundenes Untersetzungsgetriebe (22) und ein Umwandlungselement (23) der Dreh- in eine Linearbewegung für die Verstellung des Zugelementes (15) umfasst.

3. Vorrichtung nach Anspruch 1 oder 2, **dadurch gekennzeichnet, dass**
das Gehäuse (11) mit einer Aussenform eines Griffs zum Halten der Vorrichtung (10) in der Extraktionsposition ausgebildet und in diesem der Zugmechanismus (20) enthalten ist.

4. Vorrichtung nach einem der Ansprüche 1 bis 3, **dadurch gekennzeichnet, dass**
der Drehmotor (21) vorderseitig mit einer Antriebswelle und rückseitig einem elektrischen Verbindungskabel (31, 32) mit Versorgungs- und Steuerleitungen zu einem externen Gerät ausgestattet ist, wobei diese Antriebswelle des Drehmotors (21) mit dem Untersetzungsgetriebe (22) drehverbunden ist und diese zusammen mit dem Umwandlungselement (23) der Dreh- in eine Linearbewegung gleichachsig angeordnet sind.

5. Vorrichtung nach einem der Ansprüche 1 bis 4, **dadurch gekennzeichnet, dass**
der Drehmotor (21) als ein bürstenloser Gleichstrommotor, das Untersetzungsgetriebe (22) als Planetengetriebe und/oder das Umwandlungselement (23) als eine Gewindespindel/Mutter-Verbindung ausgebildet sind.

6. Vorrichtung nach einem der Ansprüche 1 bis 5, **dadurch gekennzeichnet, dass**
der Verstellweg des Zugelementes (15) im Auflager (12) mit Referenzieren seiner Längsposition ermittelbar ist und die Erhöhung der vor dem Extrahieren und/oder das Reduzieren derselben nach dem Lösen der Zahnwurzel aufgrund von bestimmten Längspositionen des Zugelementes (15) im Auflager (12) festlegbar sind.

## Claims

1. Device for the extraction of a tooth root, wherein the device (10) comprises a front mouth-side support (12), a pulling element (15) guided in the support and a pulling mechanism (20) which can be connected to this, wherein the pulling element (15) is deflected on the front side at approximately right angles to the longitudinal extension of the support (12), wherein the pulling mechanism (20) comprises a controllable motor for producing a pulling force of the pulling element (15), wherein the pulling element (15) is connectable to a pin, which can be secured to the tooth root, wherein the controllable motor is contained in a housing (11) with the front-side support (12) or is contained in a separate device, and is controlled by a control device in such a way that, with this motor such a pulling force (Fₘₐₓ) can be exerted onto the pulling element (15), that an extraction of a tooth root is possible without manual intervention, **characterized in that**
the device is equipped, the movement path per time unit of the tension element (15) can be determined by the device at a specified motor power, or when the controllable motor is a controllable electric rotary motor (21) and the device is equipped, the movement path or the movement speed of the pulling element to determine by the speed per unit of time of the rotary motor (21).

2. Device according to claim 1, **characterized in that**
the pulling mechanism (20) comprises a rotary motor (21) as a controllable motor, a reduction gear (22) rotationally connected to the motor, and a conversion element (23) for converting the rotational movement into a linear movement for the movement of the pulling element (15).

3. Device according to claim 1 or 2, **characterized in that**
the housing (11) is configured with the outer shape of a handle for holding the device (10) in the extraction position, and the pulling mechanism (20) is contained in this.

4. Device according to any one of the claims 1 to 3, **characterized in that**
the rotary motor (21) is equipped on the front side with a drive shaft and on the rear side with an electrical connection cable (31, 32) with supply and control lines, connecting to an external device, wherein this drive shaft of the rotary motor (21) is rotationally connected to the reduction gear (22) and these are arranged coaxially together with the conversion element (23) for converting the rotational movement into a linear movement.

5. Device according to any one of the claims 1 to 4, **characterized in that**
the rotary motor (21) is configured as a brushless DC motor, the reduction gear (22) as a planetary gear and/or the conversion element (23) as a threaded spindle/nut combination.

6. Device according to any one of the claims 1 to 5, **characterized in that**
the movement path of the pulling element (15) in the support (12) is determinable by referencing its longitudinal position, and the increase in this before the extraction and/or the reduction, after the detachment of the tooth root, is determined on the basis of the determined longitudinal positions of the pulling element (15) in the support (12).

## Revendications

1. Dispositif d'extraction d'une racine dentaire, dans lequel le dispositif (10) a un support (12) avant du côté de la bouche, un élément (15) de traction guidé dans ce dernier et un mécanisme (20) de traction pouvant être relié à celui-ci, dans lequel l'élément (15) de traction est du côté avant dévié à peu près à angle droit avec l'étendue longitudinale du support (12), dans lequel le mécanisme (20) de traction a un moteur pouvant être commandé pour la production d'une force de traction de l'élément (15) de traction, dans lequel l'élément (15) de traction peut être relié à une tige pouvant être fixée dans la racine dentaire, dans lequel le moteur pouvant être commandé est contenu dans un boîtier (11) avec le support (12) avant du côté frontal ou est contenu dans un appareil distinct et est commandé par un dispositif de commande, de manière à pouvoir produire par ce moteur une force (Fmax) de traction telle sur l'élément (15) de traction, qu'une extraction d'une racine dentaire soit rendue possible sans intervention manuelle, **caractérisé en ce que**
le dispositif est agencé pour déterminer le chemin de déplacement par unité de temps de l'élément (15) de traction à une puissance donnée à l'avance du moteur où le moteur pouvant être commandé est un moteur (21) électrique rotatif pouvant être commandé et le dispositif est agencé pour déterminer le chemin de déplacement ou la vitesse de déplacement de l'élément de traction par la vitesse de rotation par unité de temps du moteur (21) rotatif.

2. Dispositif suivant la revendication 1, **caractérisé en ce que**
le mécanisme (20) de traction comprend un moteur (21) rotatif comme moteur pouvant être commandé, un démultiplicateur (22) relié en rotation à celui-ci et un élément (23) de transformation du mouvement de rotation en un mouvement linéaire pour le déplacement de l'élément (15) de traction.

3. Dispositif suivant la revendication 1 ou 2, **caractérisé en ce que**
le boîtier (11) est constitué en ayant la forme extérieure d'une poignée pour le maintien du dispositif (10) dans la position d'extraction et le mécanisme (20) de traction y est contenu.

4. Dispositif suivant l'une des revendications 1 à 3, **caractérisé en ce que**
le moteur (21) rotatif est équipé du côté avant d'un arbre d'entraînement et du côté arrière d'un câble (31, 32) électrique de liaison avec des lignes d'alimentation et de commande menant à un appareil extérieur, dans lequel cet arbre d'entraînement du moteur (21) rotatif est relié en rotation au démultiplicateur (22) et ceux-ci sont montés sur un même axe ensemble avec l'élément (23) de transformation de rotation en un mouvement linéaire.

5. Dispositif suivant l'une des revendications 1 à 4, **caractérisé en ce que**
le moteur (21) rotatif est constitué sous la forme d'un moteur à courant continu sans balai, le démultiplicateur (22) sous la forme d'un engrenage épicycloïdal et/ou l'élément (23) de transformation sous la forme d'une liaison broche filetée/écrou.

6. Dispositif suivant l'une des revendications 1 à 5, **caractérisé en ce que**
le chemin de déplacement de l'élément (15) de traction dans le support (12) peut être déterminé en se référant à sa position longitudinale et l'augmentation de celui-ci avant l'extraction et/ou sa réduction après le détachement de la racine dentaire peuvent être déterminées sur la base de positions longitudinales déterminées de l'élément (15) de traction dans le support (12).
